# EUROPÄISCHE PATENTSCHRIFT

(11) **EP 4 222 412 B1**
(45) Veröffentlichungstag und Bekanntmachung des Hinweises auf die Patenterteilung: **17.09.2025**
(21) Anmeldenummer: 21791257.5
(22) Anmeldetag: 01.10.2021
(51) Int. Cl.: F17C 13/04

(54) **KUPPLUNGSVORRICHTUNG UND KRYO-BETANKUNGSANORDNUNG**
COUPLING DEVICE AND CRYO FILLING ASSEMBLY
DISPOSITIF D'ACCOUPLEMENT ET DISPOSITIF DE CRYO-RAVITAILLEMENT

(30) Priorität: 02.10.2020 EP 20020451
(43) Veröffentlichungstag der Anmeldung: 09.08.2023
(73) Patentinhaber: Butting CryoTech GmbH, 84508 Burgkirchen an der Alz (DE)
(72) Erfinder: EHEGARTNER, Florian, 82049 Pullach (DE); REITER, Bernhard, 83355 Grabenstätt (DE)
(74) Vertreter: Stornebel, Kai
(86) Internationale Anmeldenummer: PCT/EP2021/025378
(87) Internationale Veröffentlichungsnummer: WO 2022/069079

(56) Entgegenhaltungen:
- DE-A1- 102016 207 886
- DE-A1- 3 815 350
- US-A- 2 470 368

## Beschreibung

Die Erfindung betrifft eine Kupplungsvorrichtung für eine Kryo-Betankungsanordnung und eine Kryo-Betankungsanordnung mit einer derartigen Kupplungsvorrichtung

Bei einer Kryo-Betankungsanlage ergibt sich bei einem Ankuppeln einer Kupplungsvorrichtung, beispielsweise an ein Fahrzeug, ein Totraumvolumen in der Kupplungsvorrichtung. Dieses muss beispielsweise durch einen Betankungsschlauch oder ein Betankungsrohrsystem der Kupplungsvorrichtung hindurch von Luftatmosphäre oder nicht erwünschten Medien befreit und gespült werden. Bei manchen Kryo-Betankungsanlagen kann nach betriebsinternen Erkenntnissen der Anmelderin die Problematik auftreten, dass die Spülung des gesamten Betankungsschlauchs oder des Betankungs-Rohrsystems prozesstechnisch so ausgestaltet werden muss, dass gegebenenfalls ein Kaltfahren des Betankungsschlauchs oder des Betankungs-Rohrsystems vor dem Ankuppeln nicht möglich ist, sofern das Totraumvolumen durch den tiefkalten Betankungsschlauch oder das Betankungs-Rohrsystem abgeführt werden müsste. Da das Totraumvolumen beispielsweise Luftfeuchte enthalten kann, kann es zur Eisbildung innerhalb des Betankungsschlauchs oder des Betankungs-Rohrsystems und an Armaturbauteilen kommen. Dies gilt es zu vermeiden.

Aus der DE 10 2016 207 886 A1 ist eine Kupplungsvorrichtung für eine Kryo-Betankungsanordnung mit einem Hauptventil und einem Entlüftungsventil zum Entlüften eines stromabwärts des Hauptventils und des Entlüftungsventils vorgesehenen Volumens bekannt. Das Entlüftungsventil ist ausgebildet, den mindestens einen Strömungspfad zu entlüften. Während der Betankung ist das Entlüftungsventil geschlossen. Ist die Betankung beendet und soll eine Entkopplung stattfinden, wird das Entlüftungsventil betätigt, sodass sich der Druck in dem Strömungspfad verringert.

Vor diesem Hintergrund besteht eine Aufgabe der vorliegenden Erfindung darin, eine verbesserte Kupplungsvorrichtung zur Verfügung zu stellen.

Demgemäß wird eine Kupplungsvorrichtung für eine Kryo-Betankungsanordnung vorgeschlagen. Die Kupplungsvorrichtung umfasst ein Hauptventil, ein Entlüftungsventil zum Entlüften eines stromabwärts des Hauptventils und des Entlüftungsventils vorgesehenen Volumens, um so die Kupplungsvorrichtung für einen Betankungsvorgang vorzubereiten, einem Gehäuse, das ein weiteres Volumen umschließt, in dem das Hauptventil und das Entlüftungsventil angeordnet sind, und einer an dem Gehäuse vorgesehenen Absperrarmatur, mit deren Hilfe das von dem Gehäuse umschlossene Volumen zugänglich ist. In einer Weiterbildung wird eine Kupplungsvorrichtung für eine Kryo- Betankungsanordnung vorgeschlagen. Die Kupplungsvorrichtung umfasst ein Hauptventil und ein parallel zu dem Hauptventil geschaltetes Entlüftungsventil, wobei das Entlüftungsventil dazu eingerichtet ist, ein stromabwärts des Hauptventils und des Entlüftungsventils vorgesehenes Volumen zu entlüften, um so die Kupplungsvorrichtung für einen Betankungsvorgang vorzubereiten.

Dadurch, dass das Entlüftungsventil vorgesehen ist, wird ein Totraumvolumen minimiert. Durch die Ausführung des Hauptventils und des Entlüftungsventils als ansteuerbare Ventile kann ein Betankungsvorgang, beispielsweise mit einem Kryogen, automatisiert durchgeführt werden.

Dadurch, dass an dem Gehäuse die Absperrarmatur vorgesehen ist, mit deren Hilfe das von dem Gehäuse umschlossene Volumen zugänglich ist, ist es möglich, den technischen Effekt zu erreichen, dass innerhalb des Volumens vorgesehene oder angeordnete Komponenten oder Bauteile, wie beispielsweise eine stromabwärts des Hauptventils und des Entlüftungsventils angeordnete Kupplung, von einer Umgebung der Kupplungsvorrichtung abgeschirmt sind. Hierdurch kann beispielsweise ein Ausfrieren von Wasserdampf oder Gasen an diesen Bauteilen zuverlässig verhindert werden. Es ist somit möglich, diese Bauteile stets trocken zu halten.

Vorzugsweise sind das Hauptventil und das Entlüftungsventil nebeneinander angeordnet und mit Hilfe einer geeigneten Verrohrung oder mit Hilfe geeigneter Leitungen parallel zueinander geschaltet. Unter einer "Parallelschaltung" ist vorzugsweise eine Anordnung zu verstehen, bei der das Hauptventil und das Entlüftungsventil nebeneinander oder benachbart angeordnet sind, so dass entweder das Hauptventil oder das Entlüftungsventil oder sowohl das Hauptventil als auch das Entlüftungsventil von einem Fluid, beispielsweise dem Kryogen, durchströmbar sind. Im Gegensatz hierzu ist eine Reihenschaltung zu sehen, bei der das Fluid nacheinander immer sowohl durch das Hauptventil als auch durch das Entlüftungsventil strömen muss.

Das Hauptventil und das Entlüftungsventil können jeweils als Auf-Zu-Ventile ausgebildet sein. Dass das Volumen "stromabwärts" des Hauptventils und des Entlüftungsventils vorgesehen ist, bedeutet vorliegend insbesondere, dass das Volumen in einer Strömungsrichtung eines durch die Kupplungsvorrichtung strömenden Kryogens nach dem Hauptventil und dem Entlüftungsventil angeordnet ist. Die Kupplungsvorrichtung ist insbesondere geeignet, beispielsweise einen Speicherbehälter mit dem Kryogen zu betanken. Das Kryogen kann beispielsweise flüssiger Wasserstoff, Monosilan, Äthylen oder dergleichen sein.

Die Absperrarmatur ist vorzugsweise ein Kugelhahn oder kann als Kugelhahn bezeichnet werden. Die Absperrarmatur kann von einem geschlosseenen Zustand in einen geöffneten Zustand und umgekehrt verbracht werden. In dem geöffneten Zustand ist das von dem Gehäuse umschlossene Volumen durch die Absperrarmatur hindurch zugänglich. "Zugänglich" heißt vorliegend insbesondere, dass Komponenten oder Bauteile durch die Absperrarmatur hindurch in das Volumen eingeschoben oder eingeführt werden können oder Komponenten oder Bauteile durch die Absperrarmatur aus dem Volumen herausgeschoben oder herausgeführt werden können. Das Hauptventil und das Entlüftungsventil sind insbesondere innerhalb des Gehäuses angeordnet, das das Volumen umschließt.

Gemäß einer Ausführungsform ist das Entlüftungsventil pneumatisch angesteuert.

Dies ermöglicht eine automatisierte Ansteuerung des Entlüftungsventils. Das Entlüftungsventil kann jedoch auf jede beliebige Art und Weise angesteuert werden. Auch das Hauptventil kann pneumatisch angesteuert werden.

Gemäß einer weiteren Ausführungsform umfasst die Kupplungsvorrichtung ferner eine von dem Hauptventil wegführende Kupplung und eine Leitung, welche von dem Entlüftungsventil hin zu der Kupplung führt und in Fluidverbindung mit der Kupplung ist, wobei das Volumen von der Kupplung und der Leitung umschlossen ist.

Gemäß einer weiteren Ausführungsform umfasst die Kupplungsvorrichtung ferner eine von dem Hauptventil wegführende Kupplung, wobei die Kupplung innerhalb des von dem Gehäuse umschlossenen Volumens angeordnet ist, und wobei die Kupplung mit Hilfe der Absperrarmatur zugänglich ist.

Gemäß einer weiteren Ausführungsform umfasst die Kupplungsvorrichtung ferner eine Leitung, welche von dem Entlüftungsventil hin zu der Kupplung führt und in Fluidverbindung mit der Kupplung ist, wobei das stromabwärts des Hauptventils und des Entlüftungsventils vorgesehene Volumen von der Kupplung und der Leitung umschlossen ist.

Das heißt, dass das Volumen in der Kupplung und der Leitung vorgesehen ist. Vorzugsweise führt jeweils eine Leitung von einer an einem Gehäuse der Kupplungsvorrichtung vorgesehenen Kupplung zu dem Hauptventil und zu dem Entlüftungsventil. Dadurch, dass die Kupplung innerhalb des von dem Gehäuse umschlossenen Volumens angeordnet ist, ist es, wie zuvor erwähnt, möglich, die Kupplung von der Umgebung der Kupplungsvorrichtung abzuschirmen. Ein Ausfrieren von Wasserdampf oder Gasen an der Kupplung wird hierdurch zuverlässig verhindert. Die Kupplung kann somit stets trocken gehalten werden. Die Absperrarmatur schützt somit die kalte Kupplung oder schirmt diese ab.

Gemäß einer weiteren Ausführungsform umfasst die Kupplungsvorrichtung ferner ein Gehäuse mit einer ersten Wandung und einer in der ersten Wandung aufgenommenen zweiten Wandung, wobei das Hauptventil und das Entlüftungsventil innerhalb der zweiten Wandung angeordnet sind.

Gemäß einer weiteren Ausführungsform weist das Gehäuse eine erste Wandung und eine in der ersten Wandung aufgenommene zweite Wandung auf, wobei das Hauptventil und das Entlüftungsventil innerhalb der zweiten Wandung angeordnet sind.

Das heißt insbesondere, dass das Gehäuse doppelwandig ist.

Gemäß einer weiteren Ausführungsform umschließt die zweite Wandung das von dem Gehäuse umschlossene Volumen.

Das heißt insbesondere, dass die zweite Wandung das von dem Gehäuse umschlossene Volumen begrenzt oder definiert. Das Hauptventil, das Entlüftungsventil und die Kupplung sind innerhalb dieses vorgenannten Volumens platziert.

Gemäß einer weiteren Ausführungsform sind das Hauptventil und das Entlüftungsventil parallel zueinander angeordnet. Insbesondere sind das Hauptventil und das Entlüftungsventil nebeneinander oder benachbart zueinander platziert. Dies kann konstruktiv beispielsweise derart gelöst werden, dass das Entlüftungsventil in einem Ventilkolben oder Ventilkörper des Hauptventils aufgenommen und insbesondere in oder an diesem beweglich gelagert ist. Das Hauptventil und das Entlüftungsventil können unabhängig voneinander angesteuert werden.

Gemäß einer weiteren Ausführungsform umfasst die Kupplungsvorrichtung ferner eine an dem Gehäuse vorgesehene Absperrarmatur, mit deren Hilfe ein von der zweiten Wandung umschlossenes Volumen zugänglich ist.

Diese Absperrarmatur ist insbesondere eine Auf-Zu-Armatur. Auch ein zu der Kupplungsvorrichtung passender Empfängerstutzen kann eine derartige Absperrarmatur umfassen.

Ferner wird eine Kryo-Betankungsanordnung mit einer derartigen Kupplungsvorrichtung und einem Empfängerstutzen vorgeschlagen, an welchen die Kupplungsvorrichtung ankuppelbar ist.

Die Kupplungsvorrichtung kann in den Empfängerstutzen eingesteckt werden oder umgekehrt. Der Betankungsvorgang kann dann automatisiert durchgeführt werden.

Gemäß einer Ausführungsform umfasst der Empfängerstutzen ein erstes Eingriffselement, wobei die Kupplungsvorrichtung ein zu dem ersten Eingriffselement korrespondierendes erstes Gegeneingriffselement umfasst, und wobei das erste Eingriffselement in einer ersten Position der Kupplungsvorrichtung formschlüssig in das erste Gegeneingriffselement eingreift.

Das erste Eingriffselement kann beispielsweise ein verschiebbarer Bolzen sein. Das erste Gegeneingriffselement kann eine hierzu korrespondierende Ausnehmung oder Bohrung sein. Eine formschlüssige Verbindung entsteht durch das Ineinander- oder Hintergreifen von mindestens zwei Verbindungspartnern, vorliegend dem ersten Eingriffselement und dem ersten Gegeneingriffselement. Gemäß einer weiteren Ausführungsform umfasst die Kupplungsvorrichtung ein zweites Eingriffselement, wobei der Empfängerstutzen ein zu dem zweiten Eingriffselement korrespondierendes zweites Gegeneingriffselement umfasst, und wobei das zweite Eingriffselement in einer sich von der ersten Position unterscheidenden zweiten Position der Kupplungsvorrichtung formschlüssig in das zweite Gegeneingriffselement eingreift.

Das zweite Eingriffselement kann beispielsweise ein verschiebbarer Bolzen sein. Das zweite Gegeneingriffselement kann eine hierzu korrespondierende Ausnehmung oder Bohrung sein.

Gemäß einer weiteren Ausführungsform sind die Kupplungsvorrichtung und der Empfängerstutzen in der zweiten Position weiter ineinandergeschoben als in der ersten Position.

Gemäß einer weiteren Ausführungsform ist ein Betankungsvorgang nur in der zweiten Position startbar.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen der Kupplungsvorrichtung und/oder der Kryo-Betankungsanordnung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Kupplungsvorrichtung und/oder der Kryo-Betankungsanordnung hinzufügen.

Weitere vorteilhafte Ausgestaltungen der Kupplungsvorrichtung und/oder der Kryo-Betankungsanordnung sind Gegenstand der Unteransprüche sowie der im Folgenden beschriebenen Ausführungsbeispiele der Kupplungsvorrichtung und/oder der Kryo- Betankungsanordnung. Im Weiteren werden die Kupplungsvorrichtung und/oder die Kryo-Betankungsanordnung anhand von bevorzugten Ausführungsformen unter Bezugnahme auf die beigelegten Figuren näher erläutert.
Fig. 1 zeigt eine schematische Ansicht einer Ausführungsform einer Kryo-Betankungsanordnung;
Fig. 2 zeigt eine weitere schematische Ansicht der Kryo-Betankungsanordnung;
Fig. 3 zeigt eine weitere schematische Ansicht der Kryo-Betankungsanordnung; und
Fig. 4 zeigt eine weitere schematische Ansicht der Kryo-Betankungsanordnung.

In den Figuren sind gleiche oder funktionsgleiche Elemente mit denselben Bezugszeichen versehen worden, sofern nichts anderes angegeben ist.

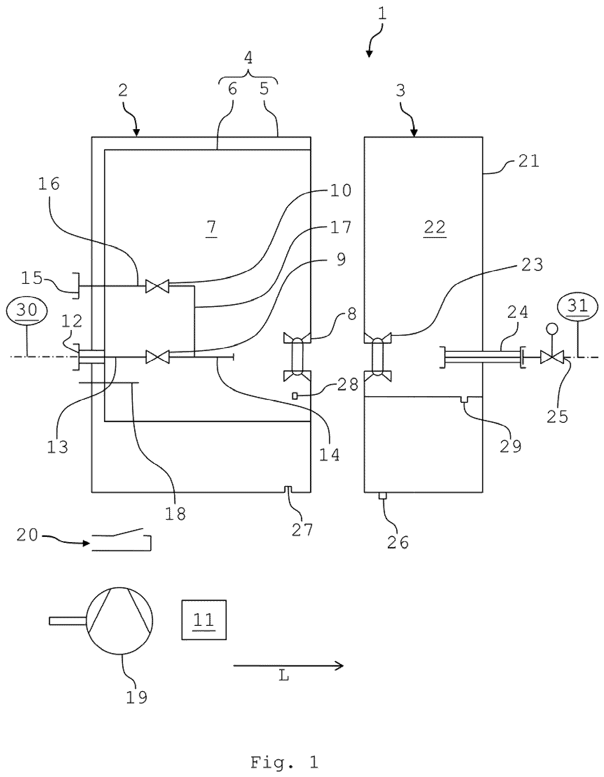

Die Fig. 1 zeigt eine schematische Ansicht einer Cryo- oder Kryo-Betankungsanordnung 1. Die Kryo-Betankungsanordnung 1 umfasst eine Kupplungsvorrichtung 2 sowie einen Empfängerstutzen 3 zum Aufnehmen der Kupplungsvorrichtung 2. Der Empfängerstutzen 3 kann die Kupplungsvorrichtung 2 zumindest abschnittsweise aufnehmen. Hierzu kann der Empfängerstutzen 3 einen Aufnahmeabschnitt oder Aufnahmebereich aufweisen. Die Kupplungsvorrichtung 2 und der Empfängerstutzen 3 können miteinander verbunden und wieder voneinander getrennt werden. Insbesondere können die Kupplungsvorrichtung 2 und der Empfängerstutzen 3 in Form eines Stecker-Steckdose-Prinzips ineinandergesteckt werden. Die Kupplungsvorrichtung 2 und der Empfängerstutzen 3 sind hierzu komplementär zueinander ausgebildet. Die Kryo-Betankungsanordnung 1 ist geeignet, beispielsweise einen Speicherbehälter mit einem Kryogen zu betanken. Das Kryogen kann beispielsweise flüssiger Wasserstoff, Monosilan, Äthylen oder dergleichen sein.

Die Kupplungsvorrichtung 2 umfasst ein Gehäuse 4 mit einer äußeren oder ersten Wandung 5 und einer in der ersten Wandung 5 aufgenommenen inneren oder zweiten Wandung 6. Das Gehäuse 4 umschließt ein erstes Volumen 7. Insbesondere umschließt die zweite Wandung 6 das erste Volumen 7. Die Kupplungsvorrichtung 2 weist eine Absperrarmatur 8 auf. Die Absperrarmatur 8 ermöglicht einen fluidischen Zugang zu dem ersten Volumen 7. Die Absperrarmatur 8 kann ein Ventil, insbesondere ein Auf-Zu-Ventil, sein. Die Absperrarmatur 8 kann als öffenbare und schließbare Klappe, Schieber oder dergleichen ausgebildet sein. Die Absperrarmatur 8 kann ein Kugelhahn sein oder als Kugelhahn bezeichnet werden.

Die Kupplungsvorrichtung 2 weist ein Hauptventil 9 und ein Entlüftungsventil 10 auf. Das Hauptventil 9 und das Entlüftungsventil 10 sind bevorzugt Auf-Zu-Ventile. Das Hauptventil 9, das Entlüftungsventil 10 und die Absperrarmatur 8 können mit Hilfe einer Steuereinrichtung 11 angesteuert werden. Das Hauptventil 9 und das Entlüftungsventil 10 lassen sich bevorzugt automatisiert ansteuern. Das Hauptventil 9 und das Entlüftungsventil 10 sind unabhängig voneinander ansteuerbar. Das Hauptventil 9 und das Entlüftungsventil 10 sind innerhalb des Gehäuses 4, insbesondere innerhalb der zweiten Wandung 6, also in dem ersten Volumen 7, platziert.

Das Hauptventil 9 und das Entlüftungsventil 10 sind parallel zueinander geschaltet. Das heißt, dass das Hauptventil 9 und das Entlüftungsventil 10 nebeneinander oder benachbart zueinander platziert sind. Dies kann konstruktiv beispielsweise dadurch gelöst werden, dass das Entlüftungsventil 10 in das Hauptventil 9 integriert wird. Beispielsweise kann ein Ventilkolben oder Ventilkörper des Entlüftungsventils 10 in einer in einem Ventilkolben oder Ventilkörper des Hauptventils 9 vorgesehenen Ventilbohrung beweglich gelagert sein.

Von einer Kupplung 12 führt eine Leitung 13 zu dem Hauptventil 9. Die Kupplung 12 kann zumindest abschnittsweise außerhalb des Gehäuses 4 angeordnet sein. Die Kupplung 12 ist insbesondere vakuumisoliert. Eine männliche Kupplung 14 führt von dem Hauptventil 9 weg. Die Kupplung 14 ist innerhalb des Gehäuses 4, insbesondere innerhalb der zweiten Wandung 6, also innerhalb des ersten Volumens 7, platziert. Die Kupplung 14 ist über die geöffnete Absperrarmatur 8 von einer Umgebung der Kryo- Betankungsanordnung 1 her zugänglich. Von einer Kupplung 15 führt eine Leitung 16 zu dem Entlüftungsventil 10. Eine weitere Leitung 17 führt von dem Entlüftungsventil 10 weg und mündet in die Kupplung 14 ein. Die Leitung 13 und die Leitung 16 sind zwei seperate Leitungen. Das Hauptventil 9 ist geeignet, die Leitung 13 abzusperren oder freizugeben. Das Entlüftungsventil 10 ist geeignet, die Leitung 16 abzusperren oder freizugeben. Dadurch, dass die Kupplung 14 innerhalb des ersten Volumens 7 platziert ist, ist diese nur über die Absperrarmatur 8 zugänglich. Die Kupplung 14 ist somit von der Umgebung der Kryo-Betankungsanordnung 1 abgeschirmt. Ein Ausfrieren von Wasserdampf oder Gasen an der Kupplung 14 wird dadurch verhindert. Die Kupplung 14 kann somit nicht vereisen und bleibt stets trocken.

Das erste Volumen 7 ist über eine Leitung 18 zugänglich. Über die Leitung 18 kann das erste Volumen 7 beispielsweise entlastet oder evakuiert werden. Der Kupplungsvorrichtung 2 kann hierzu eine Vakuumpumpe 19 zugeordnet sein. Ferner kann der Kupplungsvorrichtung 2 auch ein Start-Stop-Taster 20 zugeordnet sein. Mit Hilfe des Start-Stop-Tasters 20 kann ein Betankungsvorgang gestartet und gestoppt werden.

Nun zurückkehrend zu dem Empfängerstutzen 3 umfasst dieser ein Gehäuse 21, das ein drittes Volumen 22 umschließt. Es ist ferner noch ein zweites Volumen vorgesehen, auf das nachfolgend noch eingegangen wird. Dem Empfängerstutzen 3 ist eine Absperrarmatur 23 zugeordnet. Die Absperrarmaturen 8, 23 können einander gegenüberliegend angeordnet sein. Die Absperrarmatur 23 kann ebenfalls ein Kugelhahn sein oder als solcher bezeichnet werden. Der Empfängerstutzen 3 umfasst weiterhin eine vakuumisolierte Kupplung 24 und ein Benutzerventil 25. Das Benutzerventil 25 kann von einem Benutzer geöffnet und geschlossen werden.

Der Empfängerstutzen 3 umfasst ein erstes Eingriffselement 26, das in ein erstes Gegeneingriffselement 27 der Kupplungsvorrichtung 2 formschlüssig eingreifen kann. Das heißt, die Kupplungsvorrichtung 2 kann an dem Empfängerstutzen 3 verriegelt werden. Beispielsweise kann das erste Eingriffselement 26 beweglich gelagert sein, so dass dieses in Eingriff und außer Eingriff mit dem ersten Gegeneingriffselement 27 gebracht werden kann. Das erste Eingriffselement 26 kann beispielsweise pneumatisch oder hydraulisch angesteuert werden. Sobald das erste Eingriffselement 26 und das erste Gegeneingriffselement 27 ineinandergreifen, befinden sich die Kupplungsvorrichtung 2 und der Empfängerstutzen 3 in einer ersten Position.

Die Kupplungsvorrichtung 2 umfasst ferner ein zweites Eingriffselement 28, welches geeignet ist, in ein korrespondierendes zweites Gegeneingriffselement 29 des Empfängerstutzens 3 einzugreifen. Beispielsweise kann das zweite Eingriffselement 28 beweglich gelagert sein, so dass dieses in Eingriff und außer Eingriff mit dem zweiten Gegeneingriffselement 29 gebracht werden kann. Das zweite Eingriffselement 28 kann beispielsweise pneumatisch oder hydraulisch angesteuert werden. Sobald das zweite Eingriffselement 28 und das zweite Gegeneingriffselement 29 ineinandergreifen, befinden sich die Kupplungsvorrichtung 2 und der Empfängerstutzen 3 in einer sich von der ersten Position unterscheidenden zweiten Position. In der zweiten Position ist die Kupplungsvorrichtung 2 entlang einer Längsrichtung L der Kryo-Betankungsanordnung 1 betrachtet weiter in den Empfängerstutzen 3 hineingeschoben als in der ersten Position. Der Kupplung 12 vorgeschaltet ist eine erste Temperaturmessstelle 30. Der Kupplung 24 nachgeschaltet ist eine zweite Temperaturmessstelle 31.

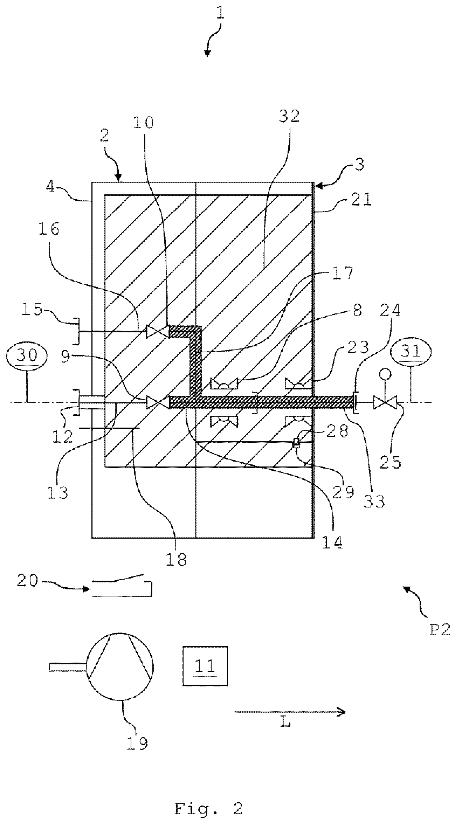

Die Funktionalität der Kryo-Betankungsanordnung 1 wird nachfolgend erläutert. Zunächst befindet sich die Kryo-Betankungsanordnung 1 in einem in der Fig. 2 gezeigten Initialzustand. In dem Initialzustand ist die Kupplungsvorrichtung 2 in einer Parkstation auf der zuvor erwähnten zweiten Position P2 verriegelt. Das heißt, das zweite Eingriffselement 28 und das zweite Gegeneingriffselement 29 greifen ineinander. Das Hauptventil 9 ist geschlossen. Das Entlüftungsventil 10 ist geöffnet. Das Benutzerventil 25 ist geschlossen. Druck und Temperatur in einem fünften Volumen 32 (schraffiert) und in einem sechsten Volumen 33 (schraffiert) sind undefiniert. Es ist ferner ein viertes Volumen vorgesehen, welches später noch erläutert wird. Das sechste Volumen 33 ist in der Kupplung 14, der Leitung 17 und in der Kupplung 24 vorgesehen. Die Kupplungen 14, 24 greifen ineinander. Hierzu kann beispielsweise die Kupplung 14 durch die geöffneten Absperrarmaturen 8, 23 zu der Kupplung 24 geführt sein. Über das Entlüftungsventil 10 kann das sechste Volumen 33 evakuiert oder mit einem geeigneten Gas, wie beispielsweise Wasserstoff, bedrückt werden.

Anschließend erfolgt ein Abkühlvorgang. Der Start des Abkühlvorgangs erfolgt automatisiert. Es erfolgt eine Druckwechselspülung des fünften Volumens 32. Die Druckwechselspülung kann beispielsweise mit gasförmigem Wasserstoff durchgeführt werden. Danach wird das fünfte Volumen 32 über die Leitung 18 evakuiert und ein Vakuum-Haltetest durchgeführt. Sofern der Vakuum-Haltetest positiv ist, wird der Vorgang fortgeführt. Bei negativem Vakuum-Haltetest wird der Prozess gestoppt und eine Fehlerroutine durchgeführt. Das Entlüftungsventil 10 wird geöffnet. Es erfolgt eine Druckwechselspülung des sechsten Volumens 33 sowie ein Druckhaltetest. Auch diese Druckwechselspülung kann mit gasförmigem Wasserstoff durchgeführt werden. Sofern der Druckhaltetest positiv ist, wird der Vorgang fortgeführt. Bei negativem Druckhaltetest wird der Prozess gestoppt und eine Fehlerroutine durchgeführt.

Ein Start des Transfers des Kryogens kann beginnen, sobald die Temperatur an der zweiten Temperaturmessstelle 31 der Temperatur an der ersten Temperaturmessstelle 30 plus 10 K entspricht. Das Hauptventil 9 ist geöffnet. Das Entlüftungsventil 10 ist geschlossen. Das Benutzerventil 25 ist geöffnet. Das fünfte Volumen 32 ist evakuiert. Das sechste Volumen 33 ist drucklos und kalt. Die Temperatur in dem sechsten Volumen 33 entspricht der Temperatur an der zweiten Temperaturmessstelle 31. Der Abkühlvorgang ist abgeschlossen, sobald an der zweiten Temperaturmessstelle 31 die Zieltemperatur erreicht ist.

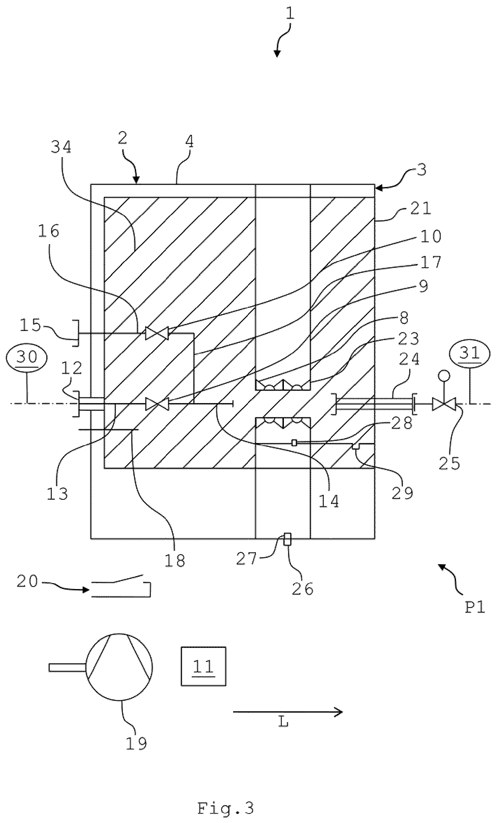

Die Fig. 3 zeigt die Kryo-Betankungsanordnung 1 nach dem Abkühlvorgang, nach dem Beenden eines Betankungsvorgangs oder nach einer Nottrennung durch den Benutzer. Zunächst wird der Transfer des Kryogens gestoppt. Es folgt ein Unterprozess zur Freigabe zum Entriegeln der Kupplungsvorrichtung 2 und des Empfängerstutzens 3. Wenn die Freigabe erfolgt, wird der Vorgang fortgesetzt.

Wenn die Freigabe nicht erfolgt, wird der Vorgang gestoppt und eine Fehlerroutine durchgeführt. Über die Kupplung 15 erfolgt eine Druckwechselspülung des sechsten Volumens 33. Anschließend wird das Entlüftungsventil 10 geschlossen.

Das Vakuum in dem fünften Volumen 32 wird über die Leitung 18 entlastet. Die zweite Position P2 wird entriegelt, so dass das zweite Eingriffselement 28 außer Eingriff mit dem zweiten Gegeneingriffselement 29 ist. Das fünfte Volumen 32 wird über die Leitung 18 mit gasförmigem Kryogen bedrückt, so dass sich die Kupplungsvorrichtung 2 und der Empfängerstutzen 3 voneinander wegbewegen. Die Absperrarmaturen 8, 23 sind nach wie vor geöffnet, so dass die Volumina 7, 22 miteinander in Fluidverbindung sind und ein gemeinsames viertes Volumen 34 bilden.

Der Druck in dem vierten Volumen 34 wird langsam gesteigert, bis sich die Kupplungsvorrichtung 2 in der ersten Position P1 befindet und in dieser mit Hilfe des ersten Eingriffselements 26 und des ersten Gegeneingriffselements 27 verriegelt werden kann. Nach dem Verriegeln in der ersten Position P1 wird das vierte Volumen 34 über die Leitung 18 auf beispielsweise 1,2 bar entlastet. Das Hauptventil 9 ist geschlossen. Das Entriegeln und das pneumatische Ausdrücken ist abgeschlossen, wenn ein dem ersten Eingriffselement 26 und dem ersten Gegeneingriffselement 27 zugeordneter Schalter oder Sensor die Information ausgibt, dass das erste Eingriffselement 26 und das erste Gegeneingriffselement 27 miteinander verriegelt sind.

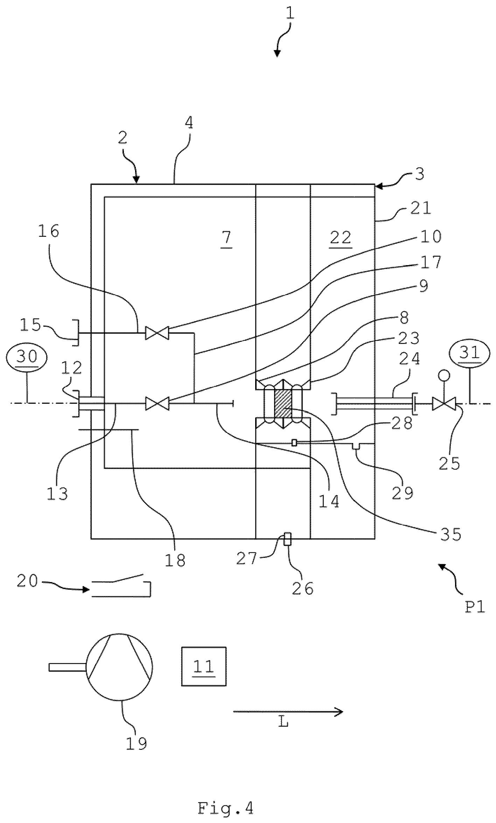

Nachfolgend werden, wie in der Fig. 4 gezeigt, die Absperrarmaturen 8, 23 geschlossen. Das Schließen kann durch eine Automatik oder den Start-Stop-Taster 20 ausgelöst werden. Zwischen den geschlossenen Absperrarmaturen 8, 23 ist ein zweites Volumen 35 vorgesehen. Die Kupplungsvorrichtung 2 und der Empfängerstutzen 3 sind nach wie vor in der ersten Position P1 verriegelt. Nach dem Entriegeln des ersten Eingriffselements 26 und des ersten Gegeneingriffselements 27 kann die Kupplungsvorrichtung 2 von dem Empfängerstutzen abgekuppelt werden.

Für das Ankuppeln der Kupplungsvorrichtung 2 an den Empfängerstutzen 3 wird der Ankuppelvorgang mit Hilfe des Start-Stop-Tasters 20 gestartet. Anschließend wird überprüft, ob die Kupplungsvorrichtung 2 derart in dem Empfängerstutzen aufgenommen ist, dass das erste Eingriffselement 26 in das erste Gegeneingriffselement 27 eingreifen kann. Ist dies der Fall, werden die Kupplungsvorrichtung 2 und der Empfängerstutzen 3 in der ersten Position P1 miteinander verriegelt. Das dritte Volumen 22 und das zweite Volumen 35 werden evakuiert. Das Vakuum in dem dritten Volumen 22 wird überprüft. Anschließend werden die Absperrarmaturen 8, 23 geöffnet.

Die erste Position P1 wird entriegelt, so dass das erste Eingriffselement 26 und das erste Gegeneingriffselement 27 nicht mehr ineinandergreifen. Das Vakuum zieht die Kupplungsvorrichtung 2 auf die zweite Position P2. Es erfolgt eine Abprüfung, ob die Kupplungsvorrichtung 2 derart relativ zu dem Empfängerstutzen 3 platziert ist, dass das zweite Eingriffselement 28 und das zweite Gegeneingriffselement 29 ineinandergreifen können. Ist dies der Fall, wird die Kupplungsvorrichtung 2 in der zweiten Position P2 verriegelt. Es erfolgt ein Druckhaltetest und eine Totraumspülung. Ein Stop beziehungsweise eine Beendigung des Ankuppelvorgangs kann über eine Anzeige oder dergleichen angezeigt werden. Nach dem Ankuppeln kann ein Betankungsvorgang durchgeführt werden. Der Betankungsvorgang kann automatisiert oder mit Hilfe des Start-Stop-Tasters 20 ausgelöst werden. Das Auslösen kann über die zuvor erwähnte Anzeige angezeigt werden. Der Transfer des Kryogens kann nur gestartet und auch wieder gestoppt werden. Der Stop kann beispielsweise mit Hilfe der Anzeige oder dergleichen angezeigt werden.

Obwohl die vorliegende Erfindung anhand von Ausführungsbeispielen beschrieben wurde, ist sie vielfältig modifizierbar.

### Verwendete Bezugszeichen

1 Kryo- Betankungsanordnung
2 Kupplungsvorrichtung
3 Empfängerstutzen
4 Gehäuse
5 Wandung
6 Wandung
7 Volumen
8 Absperrarmatur
9 Hauptventil
10 Entlüftungsventil
11 Steuereinrichtung
12 Kupplung
13 Leitung
14 Kupplung
15 Kupplung
16 Leitung
17 Leitung
18 Leitung
19 Vakuumpumpe
20 Start-Stop-Taster
21 Gehäuse
22 Volumen
23 Absperrarmatur
24 Kupplung
25 Benutzerventil
26 Eingriffselement
27 Gegeneingriffselement
28 Eingriffselement
29 Gegeneingriffselement
30 Temperaturmessstelle
31 Temperaturmessstelle
32 Volumen
33 Volumen 34 Volumen
35 Volumen
L Längsrichtung P1 Position
P2 Position

## Patentansprüche

1. Kupplungsvorrichtung (2) für eine Kryo-Betankungsanordnung (1), mit einem Hauptventil (9), einem Entlüftungsventil (10) zum Entlüften eines stromabwärts des Hauptventils (9) und des Entlüftungsventils (10) vorgesehenen Volumens (33), um so die Kupplungsvorrichtung (2) für einen Betankungsvorgang vorzubereiten, und einem Gehäuse (4), **dadurch gekennzeichnet, dass** das Gehäuse (4) ein weiteres Volumen (7) umschließt, in dem das Hauptventil (9) und das Entlüftungsventil (10) angeordnet sind, und einer an dem Gehäuse (4) vorgesehenen Absperrarmatur (8), mit deren Hilfe das von dem Gehäuse (4) umschlossene Volumen (7) zugänglich ist.

2. Kupplungsvorrichtung nach Anspruch 1, wobei das Entlüftungsventil (10) pneumatisch angesteuert ist.

3. Kupplungsvorrichtung nach Anspruch 1 oder 2, ferner umfassend eine von dem Hauptventil (9) wegführende Kupplung (14), wobei die Kupplung (14) innerhalb des von dem Gehäuse (4) umschlossenen Volumens (7) angeordnet ist, und wobei die Kupplung (14) mit Hilfe der Absperrarmatur (8) zugänglich ist.

4. Kupplungsvorrichtung nach Anspruch 3, ferner umfassend eine Leitung (17), welche von dem Entlüftungsventil (10) hin zu der Kupplung (14) führt und in Fluidverbindung mit der Kupplung (14) ist, wobei das stromabwärts des Hauptventils (9) und des Entlüftungsventils (10) vorgesehene Volumen (33) von der Kupplung (14) und der Leitung (17) umschlossen ist.

5. Kupplungsvorrichtung nach einem der Ansprüche 1 - 4, wobei das Gehäuse (4) eine erste Wandung (5) und eine in der ersten Wandung (5) aufgenommene zweite Wandung (6) aufweist, und wobei das Hauptventil (9) und das Entlüftungsventil (10) innerhalb der zweiten Wandung (6) angeordnet sind.

6. Kupplungsvorrichtung nach Anspruch 5, wobei die zweite Wandung (6) das von dem Gehäuse (4) umschlossene Volumen (7) umschließt.

7. Kupplungsvorrichtung nach einem der Ansprüche 1 - 6, wobei das Hauptventil (9) und das Entlüftungsventil (10) parallel zueinander angeordnet sind.

8. Kryo-Betankungsanordnung (1) mit einer Kupplungsvorrichtung (2) nach einem der Ansprüche 1 - 7 und einem Empfängerstutzen (3), an welchen die Kupplungsvorrichtung (2) ankuppelbar ist.

9. Kryo-Betankungsanordnung nach Anspruch 8, wobei der Empfängerstutzen (3) ein erstes Eingriffselement (26) umfasst, wobei die Kupplungsvorrichtung (2) ein zu dem ersten Eingriffselement (26) korrespondierendes erstes Gegeneingriffselement (27) umfasst, und wobei das erste Eingriffselement (26) in einer ersten Position (P1) der Kupplungsvorrichtung (2) formschlüssig in das erste Gegeneingriffselement (27) eingreift.

10. Kryo-Betankungsanordnung nach Anspruch 9, wobei die Kupplungsvorrichtung (2) ein zweites Eingriffselement (28) umfasst, wobei der Empfängerstutzen (3) ein zu dem zweiten Eingriffselement (28) korrespondierendes zweites Gegeneingriffselement (29) umfasst, und wobei das zweite Eingriffselement (28) in einer sich von der ersten Position (P1) unterscheidenden zweiten Position (P2) der Kupplungsvorrichtung (2) formschlüssig in das zweite Gegeneingriffselement (29) eingreift.

11. Kryo-Betankungsanordnung nach Anspruch 10, wobei die Kupplungsvorrichtung (2) und der Empfängerstutzen (3) in der zweiten Position (P2) weiter ineinandergeschoben sind als in der ersten Position (P1).

12. Kryo-Betankungsanordnung nach Anspruch 10 oder 11 , wobei ein Betankungsvorgang nur in der zweiten Position (P2) startbar ist.

## Claims

1. A coupling device (2) for a cryogenic refueling arrangement (1), having a main valve (9), a venting valve (10) for venting a volume (33) provided downstream of the main valve (9) and the venting valve (10) in order to prepare the coupling device (2) for a refueling operation, and a housing (4), **characterized in that** the housing (4) encloses a further volume (7) in which the main valve (9) and the venting valve (10) are arranged, and a shut-off valve (8) which is provided on the housing (4) and by means of which the volume (7) enclosed by the housing (4) is accessible.

2. The coupling device (2) according to claim 1, wherein the venting valve (10) is pneumatically actuated.

3. The coupling device (2) according to claim 1, further comprising a coupling (14) leading away from the main valve (9), wherein the coupling (14) is arranged within the volume (7) enclosed by the housing (4), and wherein the coupling (14) is accessible by means of the shut-off valve (8).

4. The coupling device (2) according to claim 3, further comprising a line which leads from the venting valve (10) toward the coupling (14) and is in fluid communication with the coupling (14), wherein the volume (33) provided downstream of the main valve (9) and the venting valve (10) is enclosed by the coupling (14) and the line (17).

5. The coupling device (2) according to one of the claims 1 to 4, wherein the housing (4) has a first wall (5) and a second wall (6) accommodated within the first wall (5), and wherein the main valve (9) and the venting valve (10) are arranged inside the second wall (6).

6. The coupling device (2) according to claim 5, wherein the second wall (6) surrounds the volume (7) enclosed by the housing (4).

7. The coupling device (2) according to one of the claims 1 to 6, wherein the main valve (9) and the venting valve (10) are arranged parallel to one another.

8. A cryogenic refueling arrangement having a coupling device (2) according to one of the claims 1 to 7 and a receiver connector (3) to which the coupling device (2) can be coupled.

9. The cryogenic refueling arrangement according to claim 8, wherein the receiver connector (3) comprises a first engagement element (26), wherein the coupling device (2) comprises a first counter-engagement element (27) corresponding to the first engagement element (26), and wherein the first engagement element (26), in a first position (P1) of the coupling device (2), engages in the first counter-engagement element (27) in an interlocking manner.

10. The cryogenic refueling arrangement according to claim 9, wherein the coupling device (2) comprises a second engagement element (28), wherein the receiver connector (3) comprises a second counter-engagement element (29) corresponding to the second engagement element (28), and wherein the second engagement element (28), in a second position (P2) of the coupling device (2) differing from the first position (P1), engages in the second counter-engagement element (29) in an interlocking manner.

11. The cryogenic refueling arrangement according to claim 10, wherein the coupling device (2) and the receiver connector (3) are pushed further into one another in the second position (P2) than they are in the first position (P1).

12. The cryogenic refueling arrangement according to claim 10, wherein a refueling operation can only be started in the second position (P2).

## Revendications

1. Dispositif d'accouplement (2) pour un ensemble de ravitaillement cryogénique (1), comprenant une vanne principale (9), une vanne de purge (10) pour purger un volume (33), prévu en aval de la vanne principale (9) et de la vanne de purge (10), afin de préparer ainsi le dispositif d'accouplement (2) à une opération de ravitaillement, et comprenant un boîtier (4),
**caractérisé en ce que** le boîtier (4) entoure un volume supplémentaire (7), dans lequel sont disposées la vanne principale (9) et la vanne de purge (10), et un robinet d'arrêt (8) est prévu sur le boîtier (4), lequel permet d'accéder au volume (7) entouré par le boîtier (4).

2. Dispositif d'accouplement selon la revendication 1,
dans lequel la vanne de purge (10) est à commande pneumatique.

3. Dispositif d'accouplement selon la revendication 1 ou 2,
comprenant en outre un raccord (14) partant de la vanne principale (9), le raccord (14) étant disposé à l'intérieur du volume (7) entouré par le boîtier (4), et le raccord (14) étant accessible à l'aide du robinet d'arrêt (8).

4. Dispositif d'accouplement selon la revendication 3,
comprenant en outre une conduite (17) qui mène de la vanne de purge (10) au raccord (14) et qui est en communication fluidique avec le raccord (14), le volume (33) prévu en aval de la vanne principale (9) et de la vanne de purge (10) étant entouré par le raccord (14) et par la conduite (17).

5. Dispositif d'accouplement selon l'une des revendications 1 à 4,
dans lequel le boîtier (4) comporte une première paroi (5) et une deuxième paroi (6) logée dans la première paroi (5), et la vanne principale (9) et la vanne de purge (10) sont disposées à l'intérieur de la deuxième paroi (6).

6. Dispositif d'accouplement selon la revendication 5,
dans lequel la deuxième paroi (6) entoure le volume (7) entouré par le boîtier (4).

7. Dispositif d'accouplement selon l'une des revendications 1 à 6,
dans lequel la vanne principale (9) et la vanne de purge (10) sont disposées parallèlement l'une à l'autre.

8. Ensemble de ravitaillement cryogénique (1) comprenant un dispositif d'accouplement (2) selon l'une des revendications 1 à 7 et une tubulure réceptrice (3) à laquelle le dispositif d'accouplement (2) peut être accouplé.

9. Ensemble de ravitaillement cryogénique selon la revendication 8,
dans lequel la tubulure réceptrice (3) comprend un premier élément d'engagement (26), le dispositif d'accouplement (2) comprend un premier élément d'engagement antagoniste (27) correspondant au premier élément d'engagement (26), et le premier élément d'engagement (26) s'engage par complémentarité de forme dans le premier élément d'engagement antagoniste (27) dans une première position (P1) du dispositif d'accouplement (2).

10. Ensemble de ravitaillement cryogénique selon la revendication 9,
dans lequel le dispositif d'accouplement (2) comprend un deuxième élément d'engagement (28), la tubulure réceptrice (3) comprend un deuxième élément d'engagement antagoniste (29) correspondant au deuxième élément d'engagement (28), et le deuxième élément d'engagement (28) s'engage par complémentarité de forme dans le deuxième élément d'engagement antagoniste (29) dans une deuxième position (P2) du dispositif d'accouplement (2), laquelle diffère de la première position (P1).

11. Ensemble de ravitaillement cryogénique selon la revendication 10,
dans lequel le dispositif d'accouplement (2) et la tubulure réceptrice (3) sont emboîtés l'un dans l'autre plus loin dans la deuxième position (P2) que dans la première position (P1).

12. Ensemble de ravitaillement cryogénique selon la revendication 10 ou 11, dans lequel une opération de ravitaillement ne peut être lancée que dans la deuxième position (P2).
